# NEW EUROPEAN PATENT SPECIFICATION

(11) **EP 3 453 779 B2**
(45) Date of publication and mention of the opposition decision: **01.04.2026**
(45) Mention of the grant of the patent: 20.04.2022
(21) Application number: 18193256.7
(22) Date of filing: 07.09.2018
(51) Int. Cl.: C23C 4/02, C23C 4/18, F01D 5/28, C23C 4/11, C23C 4/134

(54) **MULTI LAYER CMAS RESISTANT THERMAL BARRIER COATING**
MEHRSCHICHTIGE CMAS-RESISTENTE WÄRMEDÄMMSCHICHT
REVÊTEMENT DE BARRIÈRE THERMIQUE RÉSISTANT CMAS MULTICOUCHES

(30) Priority: 08.09.2017 US 201715699015
(43) Date of publication of application: 13.03.2019
(73) Proprietor: RTX Corporation, Farmington, CT 06032 (US)
(72) Inventor: LIU, Xuan, Glastonbury, CT Connecticut 06033 (US); HAZEL, Brian T., Avon, CT Connecticut 06001 (US); ZALESKI, Elisa M., Manchester, CT Connecticut 06040 (US); WERKHEISER, William F., East Hartford, CT Connecticut 06118 (US)
(74) Representative: Dehns

(56) References cited:
- EP-A2- 1 806 435
- WO-A1-2013/163058
- WO-A1-2016/071094
- WO-A1-2017/080948
- FR-A1- 3 053 076
- US-A- 6 106 959
- US-A1- 2005 013 994
- US-A1- 2005 013 994
- US-A1- 2009 252 985
- US-A1- 2011 151 132
- US-A1- 2013 260 132
- US-A1- 2014 065 408
- US-B2- 8 062 759

## Description

### TECHNICAL FIELD

The present disclosure relates generally to a multi-layer thermal barrier coating for a gas turbine engine component, and specifically to a thermal barrier coating including an outer sealing layer.

### BACKGROUND

Turbine engine airfoils, such as turbine stage rotors, are often used in desert environments and may degrade due to sand related erosion of thermal barrier coatings resulting from sand ingestion. With an increase in engine temperatures, the type of damage due to sand ingestion has shifted from erosion to structural distress due to the interaction between the sand, the heat, and the microstructure of the thermal barrier coating.

One underlying cause of the distress is the penetration of molten sand deposits into a stabilized thermal barrier coating during engine operations. During flight, turbine engines ingest siliceous particles such as dust, sand, volcanic ash, and other materials that form a calcium-magnesium-alumino-silicate (CMAS) melt at high temperatures. The CMAS melt penetrates porosity in the thermal barrier coatings. As the engine cools after operation, the CMAS melt solidifies. In subsequent operations, the solidified CMAS melt generates internal stresses during thermal cycling of the engine due to a thermal expansion mismatch between the CMAS melt and the thermal barrier coating. The internal stresses, in turn, degrade the thermal barrier coating reducing the effectiveness of the thermal barrier coating.

A prior art thermal barrier coating having the features of the preamble to claim 1 is disclosed in US 2013/260132. Another prior art thermal barrier coating with a plurality of layers is disclosed in WO 2013/163058.

### SUMMARY OF THE INVENTION

From one aspect, the present invention provides a thermal barrier coating, according to claim 1.

The gap size is defined as the average length of the shortest dimension across each point in a given gap in the thermal barrier coating.

From another aspect, the present invention provides a process for applying a sealing layer according to claim 12.

From yet another aspect, the present invention provides a gas turbine engine component in accordance with claim 10.

Features of embodiments are set forth in the dependent claims.

These and other features of the present invention can be best understood from the following specification and drawings, the following of which is a brief description.

### BRIEF DESCRIPTION OF THE DRAWINGS

Figure 1 illustrates a high level schematic view of an exemplary turbine engine component.
Figure 2 schematically illustrates a multi-layer thermal barrier coating for a turbine engine component.
Figure 3 schematically illustrates an exterior surface view of the multi-layer thermal barrier coating of Figure 2.

### DETAILED DESCRIPTION OF AN EMBODIMENT

In general, a thermal barrier coating, such as those utilized within an aircraft requires a low thermal conductivity in order to reduce a maximum temperature of the underlying substrate, a low modulus (or high strain tolerance) to improve resistance to stress induced by coefficient of thermal expansion (CTE) mismatch, particularly under cyclical thermal conditions, and a resistance to CMAS melt which can exacerbate any deficiencies in the thermal conductivity or the strain tolerance.

One existing thermal barrier that is utilized in some existing systems is a single layer of an Yttria-Stabilized Zirconia (YSZ) layer that is applied to a component via an electron beam physical vapor deposition (EB-PVD) application. The single layer structure provides adequate thermal protection and excellent strain tolerance provided by fine intercolumnar gaps resulting from the application process. By way of example, a typical YSZ thermal barrier coating applied as a single layer via the EB-PVD process will include a columnar gap size of approximately 1 micrometer.

The intercolumnar gaps associated with the strain tolerant coating microstructures resulting from the EB-PVD application also provide pathways for an undesirable ingress of molten silicates (CMAS melt) into the coating. A columnar structure coating infiltrated with molten silicates negatively affects the coating strain tolerance and its thermal conductivity. As a result engine components utilizing the single layer thermal barrier coating can be less suitable for certain applications, such as desert operations.

One potential solution to the CMAS infiltration problem arising from the EB-PVD single layer thermal barrier coating is the application of a second EB-PVD layer exterior to the first layer.

The second layer is a gadolinium zirconate (GDZ) material wherein the gadolinia content is in the range that yields a fluorite or pyrochlore phase. The GDZ material can, in some examples be a Gd₂Zr₂O₇ coating material or a pure Gd2O3 coating material. The GDZ outer layer forms the majority of the thermal barrier coating and interacts with the CMAS melt to form crystalline apatite products when the CMAS melt enters the intercolumnar gaps in the GDZ layer. Apatite formation from GDZ (or other like rare earth bearing ceramics) is a material phase which has proven to seal small intercolumnar gap sizes as produced from EB-PVD coating processes. However, the EB-PVD coating methods are expensive and are constrained by the use of vacuum based coating equipment. It is desirable to have a coating process that produces similar or better CMAS resistance capability but that is not restricted by cost or difficulty of application in the same manner as the existing two layer solution.

Two layer coatings using plasma spray processes such as suspension plasma spray, instead of the EB-PVD process, can produce a strain tolerant thermal barrier coating with the outer portion of the coating (the outer layer) being a GDZ material, for reduced thermal conductivity. An inner layer of approximately 12-75 micrometer is constructed of an YSZ layer, and is deposited on the substrate as the first layer. As used herein, the thickness of any layer refers to the thickness normal to the surface on which the layer is applied. However, due to the plasma spray process, the interconnected porosity size of the some two layer coatings is approximately 10 micrometers on average and can include portions as great as 30 micrometers too large to produce desirable CMAS resistance.

Disclosed herein is a thermal barrier coating that utilizes three layers, with an innermost layer for adherence with the underlying substrate, a middle layer for reducing thermal conductivity, and a third layer to maximize CMAS resistance. The layers are applied by coating methods not including EB-PVD such as suspension plasma spray and one or more layers may be applied using a distinct coating method from the other layers.

In order to prevent or minimize CMAS melt infiltration, a third layer is applied exterior to the first and second layer. The third layer minimizes the gap size of the intercolumnar gaps in the thermal barrier coating, and is composed of a material that beneficially reacts with CMAS melt to reduce infiltration of the coating.

The three layer CMAS resistant thermal barrier coating is described below in greater detail, with reference to a gas turbine engine component.

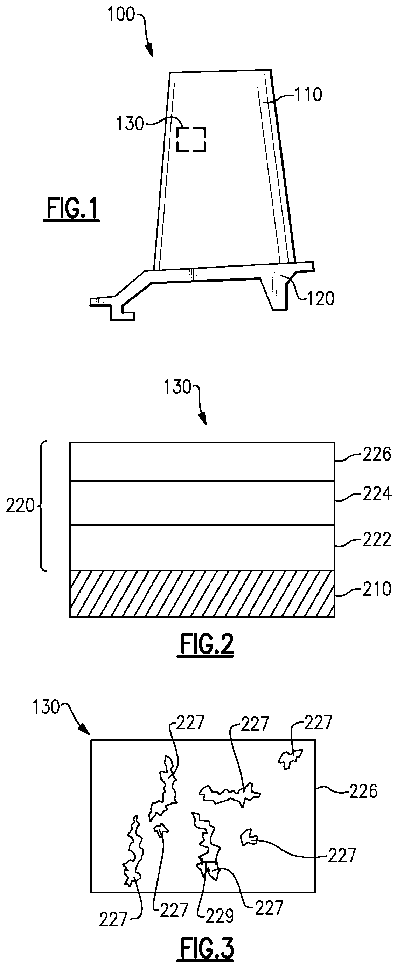

Figure 1 schematically illustrates a turbine engine component 100. In the illustrated example, the turbine engine component 100 is a turbine blade 110 supported on a platform 120 for a first stage of a high pressure turbine. One of skill in the art will appreciate, however, that the multi-layer coating and the application process described herein can be applied to any turbine engine component exposed to the gaspath and/or exposed to ingested particulate of a gas turbine engine including, but not limited to, blades, vanes, combustors, panels, blade outer air seals, or any other similar gaspath components. Dashed box 130 identifies an exemplary portion of the surface examined in more detail at Figures 2 and 3.

In order to minimize thermal damage to the turbine engine component 100, a coating is applied to the exterior surface of the turbine engine component 100 such that the exterior surface of the turbine engine component 100 is a substrate for the coating. The exterior surface can be formed of any suitable material known in the art, including a nickel based alloy, a cobalt based superalloy, a molybendum based alloy, a niobium based alloy, or the like. In alternative examples, the surface can be ceramic based or a ceramic matrix composite material.

With continued reference to Figure 1, Figure 2 schematically illustrates a cross section of an exemplary coating 220 that is applied to an exterior surface 210 of the blade 110 of Figure 1 at the dashed box 130. The coating 220 includes a first layer 222, applied to the exterior surface 210, a middle layer 224, applied to the first layer 222, and an outer layer 226, applied to the middle layer 224. In some examples, the first layer 222 is applied to the exterior surface 210 via a suspension plasma spray (SPS) and has a thickness of approximately 5-100 µm, the middle layer 224 is applied to the first layer 222 via a suspension plasma spray process (SPS) and has a thickness of approximately 50-500 µm, and the outer layer 226 is applied to the middle layer 224 via either a suspension plasma spray (SPS) or an air plasma spray process and has a thickness normal to the surface in the range of 5-150 µm.

With continued reference to Figures 1 and 2, Figure 3 illustrates an exterior surface view of the outer layer 226 of Figure 2. The outer layer 226 is alternatively referred to herein as the third layer. The outer layer 226 has a columnar microstructure with multiple gaps 227. Each of the gaps 227 has a gap size 229. The gap size 229 is the average length of the gap 227 along a shortest dimension of the gap 227. For example, when referring to Figure 3, at any given point in the gap 227 there is a shortest dimension across the gap 227 at that point. The gap size 229 is then the average length of this shortest dimension across each point within the gap 227. The average gap size 229 of all gaps 227 on a surface is referred to as the average gap size of the surface. In the case of an SPS applied outer layer 226, the gaps will tend to be at least partially interconnected with an increased gap size at a union between more than two of the gap interconnects. Additional, non-interconnected gaps can also be present, although generally in a smaller quantity.

The gaps 227 do not need to be vertically oriented. An example alternative outer layer 227 that is not columnar is one applied using an air plasma spray. Such a layer would not necessarily have vertically aligned features but would instead include a meandering interconnected intersplat boundary network.

The surface of the outer layer 226 further includes a porosity, with the porosity referring to the percentage of the surface outer layer 226 that is covered by the gaps 227. The gaps 227 of the illustrated outer layer 226 are exaggerated for explanatory effect.

The porosity of the surface can be further defined as including a connected porosity and a non-connected porosity. The connected porosity is porosity that defines a pathway from the free surface of outer layer 226 to the interior layers 222, 224, or all the way into the surface of 210. Connected porosity defines a pathway for the molten CMAS to infiltrate from the exterior surface into the coating. The more interconnected and deeper the connected porosity of a given coating, the greater potential for negative CMAS melt infiltration.

The disconnected porosity is either disconnected entirely from, or includes limited connectivity to, the interior layers 222, 224 as this will minimize infiltration rate of CMAS. This porosity is otherwise beneficial for the coating as porosity improves thermal resistance and can improve strain compliance.

With regards to the thermal barrier coating 220 of Figures 2 and 3, one function of the first layer 222 is to maximize the capability of the bond between the underlying metallic substrate (the exterior surface 210) and the ceramic coating of the second layer 224. In some examples, the metallic substrate surface may optionally have a metallic coating between the substrate and the first layer 222 such as a MCrAlX, diffusion aluminide or similar known coatings in the art for oxidation/corrosion resistance.

This structure generally requires a high toughness, a close coefficient of thermal expansion match to the exterior surface 210, and that the material of the first layer be chemically stable with the exterior surface 210. In some examples, the first layer 222 is a thin coating in the range of 5-100 micrometer

. In further examples, the first layer 222 is a thin coating in the range of 12-50 micrometer.

In some examples, the first layer 222 is composed of an YSZ composition. YSZ as describe here contains roughly 6-9 wt% of yttria in zirconia more commonly 7-8wt% ytttria. The structure of the first layer 222 can be either columnar, and or alternately the density of the first layer 222 can be high to maximize the toughness of the first layer 222. By way of example, the first layer 222 can have of a porosity of less than 12%. In one example the first layer 222 can have a porosity of approximately 6% or lower.

One of the functions of the second layer 224 is to establish a low thermal conductivity and a low in plane modulus. The second layer 224 comprises a large fraction of the total thickness of the coating 220 in order to maximize the thermal insulating function of the coating 220. In at least one example, the thickness of the second layer 224 is at least 50% of the thickness of the coating 220. The low thermal conductivity of the second layer 224 arises from one or both of an inherent conductivity of the selected material of the second layer 224 and a volume fraction and shape of a porosity of the second layer 224.

A low in plane modulus is further important to reduce strain levels generated from thermal cycling and thermal expansion differences during operation of a gas turbine engine including the component, and can be achieved via a columnar microstructure similar to the microstructure achieved via EB-PVD coating application processes. The second layer utilizes GDZ to form the second layer 224. In some implementations, chemistries generating a high toughness are desirable for the second layer 224, but are not required for all implementations of the second layer 224.

A function of the third layer 226 is to minimize or prevent infiltration of CMAS melt into the coating 220. As described above, minimization of infiltration of the CMAS melt requires minimizing the gap size of the connected porosity that would provide pathways to the second layer 224, or further inward, and requires being composed of a material that beneficially reacts with CMAS melt to reduce further infiltration.

Minimization of CMAS melt infiltration is achieved by increasing an overall density of the third layer. The density of a layer 222, 224, 226 is determined as the volume fraction of coating material determined by image analysis at 250 times magnification. Beneficial reaction with the CMAS melt is achieved via a selection of a composition of the third layer 226. Exemplary compositions can include rare earth bearing materials that precipitate an apatite phase, alumina bearing materials that precipitate an anorthite phase, or other similar connects. In one exemplary embodiment, the third layer material composition is one of GDZ and pure Gd2O3.

A more detailed description of the structure and function of the third layer 226 follows.

Suspension plasma spray processes, as well as other coating processes, can be used to produce a columnar thermal barrier coating (TBC) structure. The gap sizes and porosity associated with a columnar structure can be desirable for thermal barrier coating performance because the intercolumnar gap structure and porosity impart improved strain tolerance, and generate a coating with a low thermal conductivity. Currently utilized suspension plasma spray applications produce a microstructure with columnar gaps that can range from approximately 1 to greater than 30 micrometers.

In order to prevent infiltration of CMAS melt on an engine component utilizing the two layer barrier coating, the outer surface of the two layer coating (e.g. the outermost layer of GDZ coating) is a self-sealing layer. The self-sealing features are achieved via an increased densification of the GDZ layer. However, the increased densification of the outer layer also substantially decreases the strain tolerance during thermal cycling, and the decreased strain tolerance is exacerbated due to the thickness of the outer layer. As used herein, densification refers to the decreasing of the gap size and porosity of a microstructure of the layer.

In order to reliably utilize a GDZ coating as a thermal barrier coating, and thus achieve the self-sealing benefits derived from the GDZ material, gap sizes between the columns in the three layer structure of Figures 2 and 3 are reduced to less than 2 micrometer, and the porosity is significantly reduced, relative to previous two layer structures, on the order of approximately less than 12 percent porosity. In one example the porosity is on the order of approximately 6% or lower. As used herein, the porosity percentage refers to the volume percentage of the outer layer 226 that includes the gaps 227 as determined by an image analysis at 250 times magnification. Porosity can further be defined as the proportion of the layer 226 belonging to the gaps 227 and the proportion of the layer not belonging to the gaps. The reduced porosity and gap sizes increase the CMAS melt resistance of the GDZ coating.

However, an entire top coating (outer layer) consisting of a microstructure with the small gaps and low porosity, as would be present with a two layer structure having the reduced porosity and gap sizes, has a lower strain tolerance that may reduce resistance to thermal cycling due to the higher in plane modulus and the thermal expansion mismatch between the substrate and the coating.

To address the low strain tolerance, the example of Figures 2 and 3 uses the three layer structure, with the middle layer 224 being a GDZ based thermal barrier coating, and with a thinner outer layer 226 applied to the GDZ layer 224. The thinner outer layer 226 acts as a sealing layer to prevent ingestion of the CMAS melt into the GDZ layer 224.

The outer layer 226 is, in some examples, in the range of approximately 5 - 150 micrometer thick, normal to the underlying surface of the component. In alternative examples, the outer layer 226 is in the range of 25-100 micrometer. In one example, the outer layer 226 is comprised of a rare earth zirconate/hafnate/oxide chemistry, and is deposited using an air plasma spray and/or a suspension plasma spray coating process. The outer layer 226 includes a highly dense microstructure that includes narrow gaps 227 extending through the outer layer 226 to the middle GDZ layer 224 below. In some examples, the density of the highly dense microstructure results in a total porosity of less than or equal to 12%. In such an example, the connected porosity can be approximately 6% or less.

In some examples, the average gap size across a given surface area is less than, or equal to, approximately 2 micrometer.

In order to properly deposit and adhere the outer layer 226 to the underlying GDZ layer (the middle layer 224), the surface of the middle layer 224 optionally is roughed according to any known surface roughing procedure. Alternatively, to minimize gap size of the outer layer 226, the surface of the middle layer 224 optionally is smoothed according to any known surface finishing procedure. By way of example, if the outer layer 226 is being applied via an air plasma spray, the surface of the middle layer 224 is roughed sufficient for the deposited splats (which can be in the range of 50-80 micrometer each) to attach to the surface of the middle layer 224. Alternatively, when application is via a suspension plasma spray deposition, the deposition can bond well to underlying ceramic coatings without requiring a roughening step. In yet further examples, the roughening step can be replaced with a smoothing step to make fine gap structure of top layer more uniform and repeatable.

By utilizing a three layer microstructure, such as the exemplary microstructure described above with regards to Figures 2 and 3, the resultant coating 220 is resistant to CMAS infiltration due to the outer layer 226, while still maintaining a large majority of the strain tolerance benefits of a suspension plasma spray application processed thermal barrier coating. By incorporating the densified layer only at the outer layer 226, the thermal barrier layers 222, 224 between the component exterior surface 210 and the outer layer 226 still retain the previously achieved strain tolerances. Further, the utilization of a densified layer in the range of 50-100 micrometer of thickness allows the self-sealing mechanism to work effectively by generation of volume-expanding apatite phase similar to those found in GDZ thermal barrier coatings processed using electron-beam vapor deposition.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A three layer thermal barrier coating (220) comprising:
a first layer (222) deposited on a surface (210);
a second layer (224) deposited on the first layer (222), wherein the second layer (224) is gadolinium zirconate; and
an outer layer (226) deposited on the second layer (224), such that a gap size (229) of the thermal barrier coating (220) is reduced, wherein the outer layer (226) has a columnar microstructure with multiple gaps (227); **characterised in that**
the first layer (222) comprises an Yttria-Stabilized Zirconia (YSZ) material, and **in that** an average gap size (229) of the outer layer (226) is less than 2µm.

2. The thermal barrier coating of claim 1, wherein the first layer (222) has at least one of:
a total porosity of less than 12%; and
a thickness normal to the surface (210) in the range of 5 - 100 µm.

3. The thermal barrier coating of claim 1 or 2, wherein the second layer (224) comprises a columnar microstructure.

4. The thermal barrier coating of any preceding claim, wherein the second layer (224) is a suspension plasma spray deposited layer.

5. The thermal barrier coating of any preceding claim, wherein the second layer (224) has a thickness normal to the surface in the range of 50 - 500 µm.

6. The thermal barrier coating of any preceding claim, wherein the outer layer (226) has at least one of:
a total porosity of less than 12%;
a connected porosity of less than 6%; and
a thickness normal to the surface in the range of 5-150 µm.

7. The thermal barrier coating of any preceding claim, wherein the outer layer (226) is an air plasma spray deposited layer or a suspension plasma spray deposited layer.

8. The thermal barrier coating of any preceding claim, wherein the outer layer is comprised of a rare earth material, and the rare earth material is, for example, a rare earth zirconate, rare earth hafnate, or a rare earth oxide.

9. The thermal barrier coating of any preceding claim, wherein the outer layer (226) is a sealing layer configured to minimize ingestion of a calcium-magnesium-alumino-silicate (CMAS) melt.

10. A gas turbine engine component (100) comprising:
a component body having an exterior surface (210); and
the thermal barrier coating (220) of any preceding claim applied to the exterior surface (210).

11. The gas turbine engine component (220) of claim 10, wherein the component body comprises a blade (110).

12. A process for applying a sealing layer to form a three layer thermal barrier coating (220) comprising:
applying a first coating to a surface (210), wherein the first coating is an Yttria-Stabilized Zirconia (YSZ) material;
applying a second coating to the first coating, wherein the second coating is a gadolinium zirconate material; and
applying a third coating to the second coating using one of an air plasma spray and a suspension plasma spray process, such that an outer sealing layer is formed having a dense columnar microstructure with multiple gaps (227), wherein the dense columnar microstructure is defined by an average gap size (229) of the sealing layer being less than 2µm.

13. The process of claim 12, wherein application of the third coating to the second coating using one of an air plasma spray and a suspension plasma spray process comprises application of a rare earth material based coating layer.

14. The process of claim 13, wherein the third coating applied to the second coating includes a rare earth zirconate, rare earth hafnate, or a rare earth oxide.

## Patentansprüche

1. Dreischichtige Wärmedämmbeschichtung (220), umfassend:
eine erste Schicht (222), die auf einer Fläche (210) abgeschieden ist;
eine zweite Schicht (224), die auf der ersten Schicht (222) abgeschieden ist, wobei die zweite Schicht (224) Gadoliniumzirkonat ist; und
eine äußere Schicht (226), die auf der zweiten Schicht (224) abgeschieden ist, sodass eine Spaltgröße (229) der Wärmedämmbeschichtung (220) reduziert ist, wobei die äußere Schicht (226) eine säulenförmige Mikrostruktur mit mehreren Spalten (227) aufweist; **dadurch gekennzeichnet, dass**
die erste Schicht (222) ein Material aus Yttriumoxidstabilisiertem Zirkonoxid (YSZ) umfasst und dass eine durchschnittliche Spaltgröße (229) der äußeren Schicht (226) weniger als 2 µm beträgt.

2. Wärmedämmbeschichtung nach Anspruch 1, wobei die erste Schicht (222) mindestens eines von Folgendem aufweist:
eine Gesamtporosität von weniger als 12 %; und
eine Dicke senkrecht zu der Fläche (210) im Bereich von 5-100 µm.

3. Wärmedämmbeschichtung nach Anspruch 1 oder 2, wobei die zweite Schicht (224) eine säulenförmige Mikrostruktur umfasst.

4. Wärmedämmbeschichtung nach einem der vorangehenden Ansprüche, wobei die zweite Schicht (224) eine durch Suspensionsplasmaspritzen abgeschiedene Schicht.

5. Wärmedämmbeschichtung nach einem der vorangehenden Ansprüche, wobei die zweite Schicht (224) eine Dicke senkrecht zu der Fläche im Bereich von 50-500 µm aufweist.

6. Wärmedämmbeschichtung nach einem der vorangehenden Ansprüche, wobei die äußere Schicht (226) mindestens eines von Folgendem aufweist:
eine Gesamtporosität von weniger als 12 %;
eine verbundene Porosität von weniger als 6 %; und
eine Dicke senkrecht zu der Fläche im Bereich von 5-150 µm.

7. Wärmedämmbeschichtung nach einem der vorangehenden Ansprüche, wobei die äußere Schicht (226) eine durch Luftplasmaspritzen abgeschiedene Schicht oder eine durch Suspensionsplasmaspritzen abgeschiedene Schicht ist.

8. Wärmedämmbeschichtung nach einem der vorangehenden Ansprüche, wobei die äußere Schicht aus einem Seltenerdmaterial besteht und das Seltenerdmaterial beispielsweise ein Seltenerd-Zirkonat, ein Seltenerd-Hafnat oder ein Seltenerd-Oxid ist.

9. Wärmedämmbeschichtung nach einem der vorangehenden Ansprüche, wobei die äußere Schicht (226) eine Versiegelungsschicht ist, die dazu konfiguriert ist, die Aufnahme einer Calcium-Magnesium-Alumosilikat-(CMAS-)Schmelze zu minimieren.

10. Gasturbinentriebwerkskomponente (100), umfassend:
einen Komponentenkörper, der eine Außenfläche (210) aufweist;
und
die Wärmedämmbeschichtung (220) nach einem der vorangehenden Ansprüche, die auf die äußere Schicht (210) aufgebracht ist.

11. Gasturbinentriebwerkskomponente (220) nach Anspruch 10, wobei der Komponentenkörper eine Schaufel (110) umfasst.

12. Prozess zum Aufbringen einer Versiegelungsschicht, um eine dreischichtige Wärmedämmbeschichtung (220) zu bilden, umfassend:
Aufbringen einer ersten Beschichtung auf eine Fläche (210), wobei die erste Beschichtung ein Material aus Yttriumoxidstabilisiertem Zirkonoxid (YSZ) ist;
Aufbringen einer zweiten Beschichtung auf die erste Beschichtung, wobei die zweite Beschichtung ein Gadoliniumzirkonatmaterial ist; und
Aufbringen einer dritten Beschichtung auf die zweite Beschichtung unter Verwendung von einem von einem Luftplasmaspritzprozess und einem Suspensionsplasmaspritzprozess, sodass eine äußere Versiegelungsschicht gebildet wird, die eine dichte säulenförmige Mikrostruktur mit mehreren Spalten (227) aufweist, wobei die dichte säulenförmige Mikrostruktur dadurch definiert ist, dass eine durchschnittliche Spaltgröße (229) der Versiegelungsschicht weniger als 2 µm beträgt.

13. Prozess nach Anspruch 12, wobei die Aufbringung der dritten Beschichtung auf die zweite Beschichtung unter Verwendung von einem von einem Luftplasmaspritzprozess und einem Suspensionsplasmaspritzprozess eine Aufbringung einer auf einem Seltenerdmaterial basierenden Beschichtungsschicht umfasst.

14. Prozess nach Anspruch 13, wobei die auf die zweite Beschichtung aufgebrachte dritte Beschichtung ein Seltenerd-Zirkonat, Seltenerd-Hafnat oder ein Seltenerd-Oxid beinhaltet.

## Revendications

1. Revêtement de barrière thermique à trois couches (220) comprenant :
une première couche (222) déposée sur une surface (210) ;
une seconde couche (224) déposée sur la première couche (222), dans lequel la seconde couche (224) est constituée de zirconate de gadolinium ; et
une couche externe (226) déposée sur la seconde couche (224), de sorte qu'une taille d'espace (229) du revêtement de barrière thermique (220) est réduite, dans lequel la couche externe (226) a une microstructure colonnaire avec plusieurs espaces (227) ;
**caractérisé en ce que**
la première couche (222) comprend un matériau de zircone stabilisée à l'oxyde d'yttrium (YSZ), et **en ce qu'**une taille d'espace (229) moyenne de la couche externe (226) est inférieure à 2 µm.

2. Revêtement de barrière thermique selon la revendication 1, dans lequel la première couche (222) a au moins l'une parmi :
une porosité totale inférieure à 12 % ; et
une épaisseur normale à la surface (210) dans la plage de 5 à 100 µm.

3. Revêtement de barrière thermique selon la revendication 1 ou 2, dans lequel la seconde couche (224) comprend une microstructure colonnaire.

4. Revêtement de barrière thermique selon une quelconque revendication précédente, dans lequel la seconde couche (224) est une couche déposée par pulvérisation au plasma en suspension.

5. Revêtement de barrière thermique selon une quelconque revendication précédente, dans lequel la seconde couche (224) a une épaisseur normale à la surface dans la plage de 50 à 500 µm.

6. Revêtement de barrière thermique selon une quelconque revendication précédente, dans lequel la couche externe (226) a au moins l'une parmi :
une porosité totale inférieure à 12 % ;
une porosité connexe inférieure à 6 % ; et
une épaisseur normale à la surface dans la plage de 5 à 150 µm.

7. Revêtement de barrière thermique selon une quelconque revendication précédente, dans lequel la couche externe (226) est une couche déposée par pulvérisation au plasma à l'air ou une couche déposée par pulvérisation au plasma en suspension.

8. Revêtement de barrière thermique selon une quelconque revendication précédente, dans lequel la couche externe est constituée d'un matériau de terre rare, et le matériau de terre rare est, par exemple, un zirconate de terre rare, un hafnate de terre rare ou un oxyde de terre rare.

9. Revêtement de barrière thermique selon une quelconque revendication précédente, dans lequel la couche externe (226) est une couche de scellement configurée pour minimiser l'ingestion d'une masse fondue de calcium-magnésium-aluminosilicate (CMAS).

10. Composant de moteur à turbine à gaz (100) comprenant :
un corps de composant ayant une surface extérieure (210) ; et
le revêtement de barrière thermique (220) selon une quelconque revendication précédente appliqué sur la surface extérieure (210).

11. Composant de moteur à turbine à gaz (220) selon la revendication 10, dans lequel le corps de composant comprend une aube (110).

12. Procédé d'application d'une couche de scellement pour former un revêtement de barrière thermique à trois couches (220) comprenant :
l'application d'un premier revêtement sur une surface (210), dans lequel le premier revêtement est un matériau de zircone stabilisée à l'oxyde d'yttrium (YSZ) ;
l'application d'un deuxième revêtement sur le premier revêtement, dans lequel le deuxième revêtement est un matériau de zirconate de gadolinium ; et
l'application d'un troisième revêtement sur le deuxième revêtement en utilisant l'un d'un procédé de pulvérisation au plasma à l'air et d'un procédé de pulvérisation au plasma en suspension, de sorte qu'une couche de scellement externe est formée ayant une microstructure colonnaire dense avec plusieurs espaces (227), dans lequel la microstructure colonnaire dense est définie par une taille d'espace (229) moyenne de la couche de scellement étant inférieure à 2 µm.

13. Procédé selon la revendication 12, dans lequel l'application du troisième revêtement sur le deuxième revêtement en utilisant l'un d'un procédé de pulvérisation au plasma à l'air et d'un procédé de pulvérisation au plasma en suspension comprend l'application d'une couche de revêtement à base de matériaux de terres rares.

14. Procédé selon la revendication 13, dans lequel le troisième revêtement appliqué sur le deuxième revêtement comporte un zirconate de terre rare, un hafnate de terre rare ou un oxyde de terre rare.
